(19)

Europäisches
Patentamt

European
Patent Office

Office européen
des brevets

(11) **EP 4 395 405 A1**

(12) **EUROPEAN PATENT APPLICATION**

(43) Date of publication:
**03.07.2024 Bulletin 2024/27**

(21) Application number: **23216177.8**

(22) Date of filing: **13.12.2023**

(51) International Patent Classification (IPC):
*H04W 24/02* (2009.01)    *H04W 52/34* (2009.01)

(52) Cooperative Patent Classification (CPC):
**H04W 24/02; H04W 52/343**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 FI 20226171**

(71) Applicant: **Nokia Solutions and Networks Oy
02610 Espoo (FI)**

(72) Inventor: **MAGGI, Lorenzo
Paris (FR)**

(74) Representative: **Nokia EPO representatives
Nokia Technologies Oy
Karakaari 7
02610 Espoo (FI)**

(54) **OPTIMIZING USAGE OF POWER USING SWITCH OFF OF CELLS BASED ON BAYESIAN OPTIMISATION**

(57)    Disclosed is a method comprising determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, defining the search region to have a starting point in which the pair of thresholds has values corresponding to the cells comprised in the group of cells being activated during a deployment period, regardless of a status of a network, and the values increase in the search region, initiating the Bayesian model, retrieving at least one key performance indicator, associated with the group of cells, collected during latest deployment period, retrieving a value of the minimum threshold and a value of the maximum threshold applied during the latest deployment period and convert the retrieved values for the Bayesian model, and updating the Bayesian model based on the at least one key performance indicator and the retrieved and converted values.

```
310   Determine search region
        │
        ▼
320   Initialize Bayesian model
        │
        ▼
330   KPI retrieval  ◄──────────┐
        │                        │  Deployment period
        ▼                        │
340   Update Bayesian model ─────┘
```

**FIG. 3**

**Description**

**Field**

The following exemplary embodiments relate to wireless communication and saving energy consumed within a cellular communication network.

**Background**

Cellular communication networks comprise capacity that is capable of handling communication during peak hours. Yet, the resources required to handle peak hours may not be needed all the time. Thus, to optimize the operating hours of the resources may help to reduce the energy required by the network.

**Brief Description**

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for performing: determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, defining the search region to have a starting point in which the pair of thresholds has values corresponding to the cells comprised in the group of cells being activated during a deployment period, regardless of a status of a network, and the values increase in the search region, initiating the Bayesian model, retrieving at least one key performance indicator, associated with the group of cells, collected during latest deployment period, retrieving a value of the minimum threshold and a value of the maximum threshold applied during the latest deployment period and convert the retrieved values for the Bayesian model, and updating the Bayesian model based on the at least one key performance indicator and the retrieved and converted values.

In some example embodiments according to the first aspect, the means comprises at least one processor, and at least one memory storing instructions that, when executed by the at least one processor, to cause the performance of the apparatus.

According to a second aspect there is provided an apparatus comprising at least one processor, and at least one memory storing instructions that, when executed by the at least one processor, to cause the apparatus at least to: determine, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, define the search region to have a starting point in which the pair of thresholds has values corresponding to the cells comprised in the group of cells being activated during a deployment period, regardless of a status of a network, and the values increase in the search region, initiate the Bayesian model, retrieve at least one key performance indicator, associated with the group of cells, collected during latest deployment period, retrieve a value of the minimum threshold and a value of the maximum threshold applied during the latest deployment period and convert the retrieved values for the Bayesian model, and update the Bayesian model based on the at least one key performance indicator and the retrieved and converted values.

According to a third aspect there is provided a method comprising: determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, defining the search region to have a starting point in which the pair of thresholds has values corresponding to the cells comprised in the group of cells being activated during a deployment period, regardless of a status of a network, and the values increase in the search region, initiating the Bayesian model, retrieving at least one key performance indicator, associated with the group of cells, collected during latest deployment period, retrieving a value of the minimum threshold and a value of the maximum threshold applied during the latest deployment period and convert the retrieved values for the Bayesian model, and updating the Bayesian model based on the at least one key performance indicator and the retrieved and converted values.

In some example embodiment according to the third aspect the method is a computer implemented method.

According to a fourth aspect there is provided a computer program comprising instructions which, when executed by an apparatus, cause the apparatus to perform at least the following: determine, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, define the search region to have a starting point in which the pair of thresholds has values corresponding to the cells comprised in the group of cells being activated during a deployment period, regardless of a status of a network, and the values increase in the search region, initiate the Bayesian model, retrieve at least one key performance indicator, associated with the group of cells, collected during latest deployment period, retrieve a value of the minimum threshold and a value of the maximum threshold applied during the latest deployment period and convert the retrieved values for the Bayesian model, and update the Bayesian model based on the at least one key performance indicator and the retrieved and converted values.

According to a fifth aspect there is provided a computer program comprising instructions stored thereon for performing at least the following: determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, defining the search region to have a starting point in which the pair of thresholds has values corresponding to the cells comprised in the group of cells being activated during a deployment period, regardless of a status of a network, and the values increase in the search region, initiating the Bayesian model, retrieving at least one key performance indicator, associated with the group of cells, collected during latest deployment period, retrieving a value of the minimum threshold and a value of the maximum threshold applied during the latest deployment period and convert the retrieved values for the Bayesian model, and updating the Bayesian model based on the at least one key performance indicator and the retrieved and converted values.

According to a sixth aspect there is provided a non-transitory computer readable medium comprising program instructions that, when executed by an apparatus, cause the apparatus to perform at least the following: determine, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, define the search region to have a starting point in which the pair of thresholds has values corresponding to the cells comprised in the group of cells being activated during a deployment period, regardless of a status of a network, and the values increase in the search region, initiate the Bayesian model, retrieve at least one key performance indicator, associated with the group of cells, collected during latest deployment period, retrieve a value of the minimum threshold and a value of the maximum threshold applied during the latest deployment period and convert the retrieved values for the Bayesian model, and update the Bayesian model based on the at least one key performance indicator and the retrieved and converted values.

According to a seventh aspect there is provided a non-transitory computer readable medium comprising program instructions stored thereon for performing at least the following: determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, defining the search region to have a starting point in which the pair of thresholds has values corresponding to the cells comprised in the group of cells being activated during a deployment period, regardless of a status of a network, and the values increase in the search region, initiating the Bayesian model, retrieving at least one key performance indicator, associated with the group of cells, collected during latest deployment period, retrieving a value of the minimum threshold and a value of the maximum threshold applied during the latest deployment period and convert the retrieved values for the Bayesian model, and updating the Bayesian model based on the at least one key performance indicator and the retrieved and converted values.

According to an eighth aspect there is provided a computer readable medium comprising program instructions that, when executed by an apparatus, cause the apparatus to perform at least the following: determine, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, define the search region to have a starting point in which the pair of thresholds has values corresponding to the cells comprised in the group of cells being activated during a deployment period, regardless of a status of a network, and the values increase in the search region, initiate the Bayesian model, retrieve at least one key performance indicator, associated with the group of cells, collected during latest deployment period, retrieve a value of the minimum threshold and a value of the maximum threshold applied during the latest deployment period and convert the retrieved values for the Bayesian model, and update the Bayesian model based on the at least one key performance indicator and the retrieved and converted values.

According to a ninth aspect there is provided a computer readable medium comprising program instructions stored thereon for performing at least the following: determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells, defining the search region to have a starting point in which the pair of thresholds has values corresponding to the cells comprised in the group of cells being activated during a deployment period, regardless of a status of a network, and the values increase in the search region, initiating the Bayesian model, retrieving at least one key performance indicator, associated with the group of cells, collected during latest deployment period, retrieving a value of the minimum threshold and a value of the maximum threshold applied during the latest deployment period and convert the retrieved values for the Bayesian model, and updating the Bayesian model based on the at least one key performance indicator and the retrieved and converted values.

**List of Drawings**

In the following, the invention will be described in greater detail with reference to the embodiments and the accompanying drawings, in which

> FIG. 1 illustrates an exemplary embodiment of a radio access network.
> FIG. 2A and 2B illustrate example embodiments regarding power saving groups.
> FIG. 3 illustrates a flow chart according to another example embodiment.
> FIG. 4 illustrates an example embodiment of an apparatus.

**Description of Embodiments**

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Global System for Mobile Communications (GSM) or any other second generation cellular communication system, Universal Mobile Telecommunication System (UMTS, 3G) based on basic wideband-code division multiple access (W-CDMA), high-speed packet access (HSPA), Long Term Evolution (LTE), LTE-Advanced, a system based on IEEE 802.11 specifications, a system based on IEEE 802.15 specifications, a fifth generation (5G) mobile or cellular communication system, 5G-Advanced and/or 6G. The embodiments are not, however, restricted to the systems given as an example but a person skilled in the art may apply the solution to other communication systems provided with necessary properties.

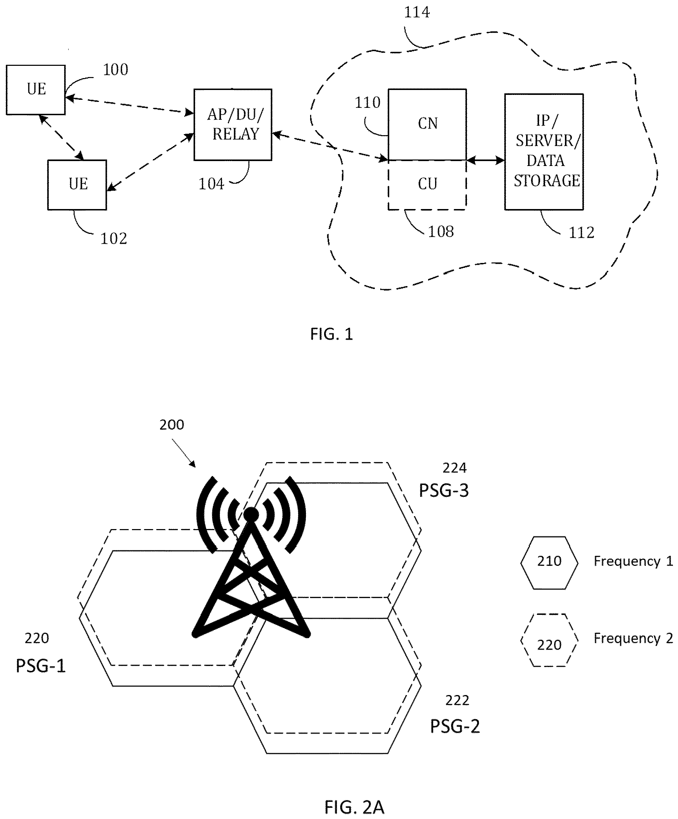

FIG. 1 depicts examples of simplified system architectures showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an exemplifying radio access network.

FIG. 1 shows terminal devices 100 and 102 configured to be in a wireless connection on one or more communication channels in a cell with an access node (such as (e/g)NodeB) 104 providing the cell. The terminal devices 100 and 102 may also be called as mobile device, or user equipment (UE), or user terminal, user device, etc. The access node 104 may also be referred to as a node, or a base station, or any other type of interfacing device including a relay station capable of operating in a wireless environment. The physical link from a terminal device to a (e/g)NodeB is called uplink or reverse link and the physical link from the (e/g)NodeB to the terminal device is called downlink or forward link. It should be appreciated that (e/g)NodeBs or their functionalities may be implemented by using any node, host, server or access point etc. entity suitable for such a usage. It is to be noted that although one cell is discussed in this exemplary embodiment, for the sake of simplicity of explanation, multiple cells may be provided by one access node in some example embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices to external packet data networks, or mobile management entity (MME), etc.

The terminal device illustrates one type of an apparatus to which resources on the air interface are allocated and assigned, and thus any feature described herein with a terminal device may be implemented with a corresponding apparatus, such as a relay node. An example of such a relay node is a layer 3 relay (self-backhauling relay) towards the base station. Another example of such a relay node is a layer 2 relay. Such a relay node may contain a terminal device part and a Distributed Unit (DU) part. A CU (centralized unit) may coordinate the DU operation via F1AP -interface for example.

The terminal device may refer to a portable computing device that includes wireless mobile communication devices operating with or without a subscriber identification module (SIM), or an embedded SIM, eSIM. A terminal device may also be a device having capability to operate in Internet of Things (IoT) network which is a scenario in which objects are provided with the ability to transfer data over a network without requiring human-to-human or human-to-computer interaction. The terminal device may also utilise cloud computing. The terminal device (or in some embodiments a layer 3 relay node) is configured to perform one or more of user equipment functionalities.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications such as (massive) machine-type communications (mMTC), including vehicular safety, different sensors and real-time control. 5G is expected to have multiple radio interfaces, namely below 6GHz, cmWave and mmWave, and also being integratable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The architecture in LTE networks is fully distributed in the radio and fully centralized in the core network. The low latency applications and services in 5G may require bringing the content close to the radio which may lead to local break out and multi-access edge computing (MEC). 5G enables analytics and knowledge generation to occur at the source of the data. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, and/or utilise services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NFV) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology that may be used includes for example Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

It is to be noted that the depicted system is an example of a part of a radio access system and the system may comprise a plurality of (e/g)NodeBs, the terminal device may have an access to a plurality of radio cells and the system may comprise also other apparatuses, such as physical layer relay nodes or other network elements, etc. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. In some exemplary embodiments, in multilayer networks, one access node provides one kind of a cell or cells, and thus a plurality of (e/g)NodeBs are required to provide such a network structure.

Cellular communication networks consume significant amounts of energy. For example, energy consumption of a Radio Access Network (RAN) may account for 20-25% of the network Total Cost of Ownership (TCO). Also, the energy needs of cellular communication networks in future may increase due to increased cellular densities, massive MIMO and further advances. In a RAN, a significant amount of the energy consumed is due to the access nodes comprised in the RAN. The access nodes comprise Power Amplifiers (PAs) that use much of that energy and also baseband processing and switching require energy. To address the energy consumption would therefore be beneficial. One aspect from which the situation can be addressed is to monitor usage of Physical Resource Block (PRB). For example, the PRB utilization may be monitored on a group of cells known as the Power Savings Group (PSG). If the PRB utilization drops below a pre-configured threshold, one or more cells may be switched off using a graceful shutdown procedure. The cells may then be switched back on when the PRB utilization grows above another pre-configured threshold. For example, the cells may be switched off during the night.

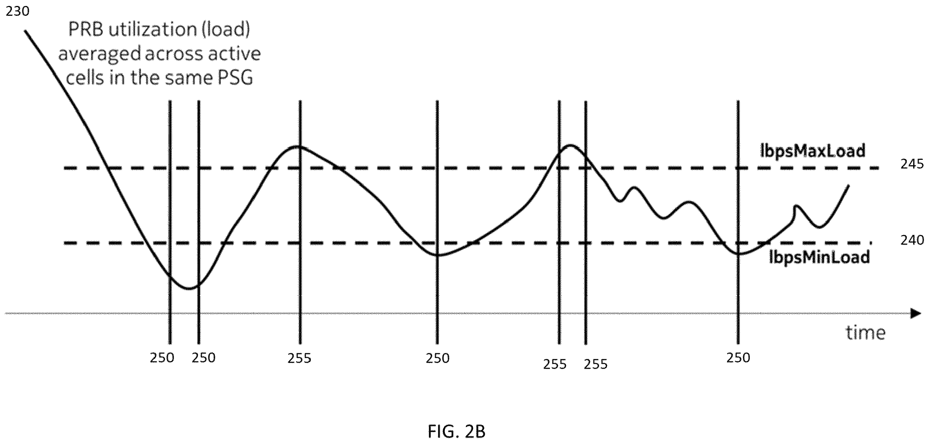

FIG. 2A and 2B illustrate example embodiments regarding PSGs. In the example embodiment of FIG. 2A, there is an access node 200. In this example embodiment, there are plurality of cells provided by the access node 200. Some of those cells are operating at a first frequency band 210 and some at a second frequency band 215. For example, the first frequency band 210 may be for LTE and the second frequency range 215 may be for 5G. For both frequency ranges, there are in this example embodiment, three different PSGs, PSG 220, PSG 222 and PSG 224. The load of the PSGs, 220, 222 and 224 may be monitored and cells may be switched on or off based on the monitored load. The load may be understood as traffic load.

FIG. 2B illustrates a graph 230 for load and how the amount of load varies along a timeline. The graph 230 is thus for a PRB utilization averaged across active cells in the same PSG. Vertical lines 250 indicate cell switch off -events and vertical lines 255 indicate cell switch on -events. When a cell is switched off, the cell may be understood to be deactivated as the frequency layer is switched off. Also, when a cell is switched on, the cell may be understood to be activated as the frequency layer is switched on. When the PRB utilization drops below a pre-configured threshold 240, indicated as lbpsMinLoad and also called as $\rho_{min}$, then at least one cell is switched off through a graceful shutdown procedure. Also, when the PRB utilization grows above another pre-configured threshold 245, indicated as lbpsMaxLoad and also called as $\rho_{max}$, then at least one cell is switched on. The at least one cell that is switched on may be the same as the at least one cell that was switched off when the PRB utilization was below the threshold 240, or it may be another at least one cell provided by the access node 200.

The higher the thresholds 240 and 245 are, the more energy may be saved as there are, on average, fewer active cells causing energy consumption by the access node 200. However, for the same reason, such energy savings are achieved at the expense of end-user Quality of Service (QoS) which tends to degrade as thresholds increase. In other words, as a cell is switched-off, the power amplifiers of the cell are consequently disabled, which has a benefit of saving energy. Yet, this action may also have consequences to the network, such as inducing an increase of PRB utilization on remaining cells. During the procedure of switching-off a cell, terminal devices connected to the cell are handed over to neighboring cells within the same PSG. This may reduce the throughput of all terminal devices, because as PRB utilization per cell increases, the average throughput perceived by the terminal devices may decrease.

Thus, when determining the pre-configured threshold values, those should be determined such that the highest energy savings are obtained while avoiding QoS degradation to the terminal devices and frequent cell shutdowns. In other words, this may be understood such that the QoS should be good enough but not too good. Additionally, there may be further objectives such as avoiding too frequent cell shutdown/power-up that may jeopardize the network stability and induce too frequent handovers. Thus, for each PSG it may be desirable to determine a pair of thresholds, that is $\rho_{min}, \rho_{max}$ that achieve:

$$\min_{\rho \in \mathcal{R}} \text{BTS energy consumption}(\rho_{min}, \rho_{max}) \quad (1)$$

$$s.t. \ \Pr(\text{KPI} \geq Y) \geq X$$

In the equation above BTS refers to the access node and key performance indicator (KPI) indicates at least one key performance indicator, that has been chosen, such as downlink (DL)/uplink (UL) throughput/traffic volume, or a positive linear combination of several individual KPIs.

In order to optimize values for minimum and maximum thresholds with regard to switching cells on and/or off, one example embodiment comprises a combination of offline and online optimization may be utilized. Offline optimization may be understood as optimization that may require measurements from a live network, but it does not cause any configuration changes to the live network and thus the offline optimization may be performed without disturbing the network and/or impacting key performance indicators of the network. Online optimization may be understood as optimization that may be done by configuring the live network and measuring the outcome, which may disturb the network and/or impact key performance indicators of the network. The network may be a cellular communication network comprising a plurality of access nodes. As part of the offline optimization, a search of $\rho$ may be delimited to a limited and safe search region, which may be referred to as a segment. Once the segment is determined, then as part of online optimization a selection of threshold values, that are pre-determined threshold values, may be fine-tuned within the determined segment. After the threshold values have been determined, then a constraint regarding the minimum throughput that is to be experienced by a terminal device that is served by the network may be fine-tuned in the online optimization.

In this example embodiment, the offline part is for restricting the search space and speeding up learning convergence of online exploration, as well as to focus the search on reasonably good thresholds from its very start.

A central node, such as a Self-Organized Network (SON) node may be used in the offline part. The SON may retrieve historical data such as PRB utilization, DL throughput and channel quality indicator (CQI) for each cell that is active and this retrieving may be perform all over the network, which may mean thousands of sites. Then the offline part may utilize a network simulator to estimate the average number of active cells and probability that the KPI is higher than a certain threshold. Historical data may be used to estimate CQI distribution and traffic pattern in each PSG, which is then fed to the network simulator. Then the offline part determines a threshold search region $\mathcal{R}$ for each PSG, in other words, the set of all possible thresholds that can potentially be deployed in the network for each PSG. Such region is the set of thresholds that are considered to be safe, for example, thresholds for which $\Pr(\text{KPI} \geq Y)$ is sufficiently close to the target $X$ in equation (1)) and with good energy savings potential.

The online part in this example embodiment then refines the threshold optimization by looking for the best threshold within the search region by a Bayesian-informed trial and error procedure. In the online part in this example embodiment, the thresholds are optimized on a PSG basis. The SON node may then update a Bayesian model of the unknown function Pr(KPI $\geq$ Y|$\rho$) for each threshold $\rho := (\rho_{min}, \rho_{max})$ comprised in the search region $\mathcal{R}$ for each PSG and for the next iteration, such as a day, deploy in the PSG thresholds $\rho^*$ for which IE[Pr(KPI $\geq$ Y|$\rho^*$)] = X, where expectation is taken with respect to the Bayesian model built.

Yet, it may be that it is beneficial to have less data to be stored than what is required for storing historical data from across a network if storage space for example is limited. Also, there may not be always enough resources available for running a network simulator and performing complex inference operations, such as estimating the average number of active cells and the throughput statistics, for the possible threshold pairs and for each of the of PSGs. Also, in order to achieve improved accuracy of the inference of at least one of the number of active cells, and throughput statistics, real data may be preferred for determining a search region.

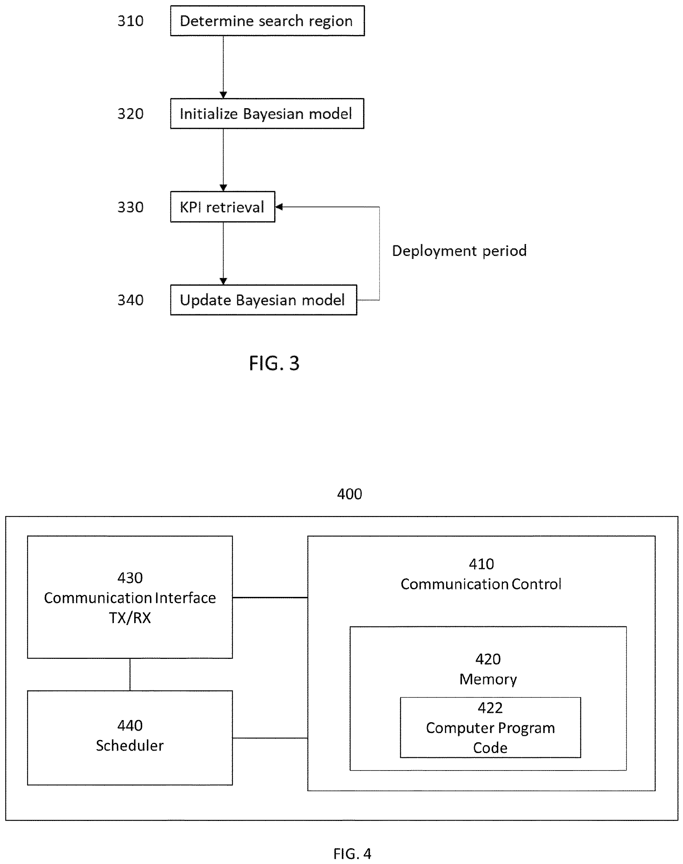

FIG. 3 illustrates a flow chart according to another example embodiment. In this example embodiment a computing node, which may be an access node itself or another node that is connected to the access node and may also be referred to as a network element, may train a Bayesian model on basis of a PSG and a power saving window (PSW), which may be understood as a deployment period. It is to be noted that other models than Bayesian model could be used as well. In this example embodiment, the Bayesian model is selected as it is a suitable model also when there is limited amount of data available for training the Bayesian model such that suitable values may be obtained when using the trained Bayesian model. In this example embodiment the Bayesian model estimates the quality of a KPI as a function of the deployed min/max load thresholds $\rho$, i.e., $f(\rho)$: = Pr(KPI $\geq$ Y|$\rho$), for all the thresholds $\rho$ comprised in a search region. The search region is a region that may be determined without requiring computation and it may be set to be the same across all PSGs. As is illustrated in FIG. 3, in block 310, a search region is determined, and the search region is determined for the Bayesian model for determining a pair of thresholds comprising minimum threshold and a maximum threshold. The pair of thresholds is for a group of cells, that may be understood as a PSG, and which are provided by the access node. The minimum threshold is for deactivating at least one of the cells in the group of cells and the maximum threshold is for activating at least one of the cells comprised in the group of cells. The at least one cell that is deactivated may be the same as the at least one cell that is activated or they may differ from each other. The deactivation may also be understood as switching off the cell, which may be done gracefully, and the activation may be understood as switching on the cell.

The search region may be determined such that a starting point is defined for the search region. The start point may be defined such that the pair of thresholds has values that correspond to the cells of the group of cells being activated during a deployment period regardless of the status of the network. In other words, the starting point may correspond to the pair of thresholds having values that correspond to the PSG not being switched off during a deployment period. For example, all the cells of the group of cells are always active during the deployment period regardless of the status of the network. By having a starting point that corresponds to the cells of the group of cells to be active regardless of the status of the network, a benefit of being able to go back to zero in case things wrong may be achieved. Additionally, the search region may be defined such that values in the search region are increasing.

As an example, for the block 310, for each group of cells for a given deployment period, such as a pre-determined time slot within a day, e.g., 9am-5pm, a search region may be determined. The search region may be defined to comprise a threshold pair that is $\rho_{min}$ = 0, $\rho_{max}$ = 0, and the search region may be defined to be increasing in both $\rho_{min}$, $\rho_{max}$ coordinates. For example, the search region $\mathcal{R}$ for the group of cells is defined as the straight segment between (0,0) and (Y,2Y), with Y>0.

Next, in this example embodiment, the Bayesian model is initiated as illustrated in step 320. The Bayesian model may be initiated for example by defining a parametrized function for which values of different pairs of thresholds within the search region are provided as an input and by setting an initial prior distribution for parameters of the parametrized function.

For example, the function Pr(KPI $\geq$ Y|$\rho$) that is a function of threshold pairs $\rho$, may be re-defined as a parametrized function $f_\theta(x)$ in which $x \in [0; 1]$ and defines a one-to-one mapping with the search region $\mathcal{R}$ and $\theta$ is a set of parameters. In case the search region is defined as the straight segment between (0,0) and (Y,2Y), with Y>0, the one-to-one mapping may be defined as (xY, 2xY) with $x \in [0; 1]$. As one alternative, the function $f_\theta(x)$ may be defined as a piece-wise linear function bounded between 0 and 1, i.e., $f_\theta(x)$ = max(min(ax + b, 1), 0), with $\theta$ = [a, b].

The initialization of the Bayesian model may further comprise setting the initial prior distribution for example such that the prior distribution $p(\theta)$ for parameters $\theta$ is set with $p(\theta = \overline{\theta})$ = 0 for all $\overline{\theta}$ for which $f_\theta(\cdot)$ is increasing. As an example, in case the function $f_\theta(x)$ is defined as the piece-wise linear function bounded between 0 and 1, the prior distribution is a truncated Gaussian distribution with $p(\theta_0)$ = 0 for all $\theta$ = [a > 0, b], to ensure that $f_\theta(x)$ is non-increasing in x.

Next, in this example embodiment, one or more KPIs are retrieved as illustrated in block 330. The retrieval may be performed in an iterative manner and the computing node may retrieve the KPIs from the network with a configuration that is a legacy configuration that has not been optimized and then update the Bayesian model accordingly. The one or more KPIs are KPIs that are associated with the group of cells, and which are collected during the latest deployment period. The one or more KPIs may be any suitable KPIs and two or more KPIs may be combined to form one KPI. Examples of KPIs include for example DL throughput and load. The deployment period may be any suitable period that is considered to provide enough data for the Bayesian model. For example, one day may be used as a deployment period. Thus, at regular intervals i = 1,2, ..., in accordance with the deployment period, for example every day, the computing node may retrieve the one or more KPIs of interest associated with the group of cells collected during the lates deployment period for that group of cells. It may then be determined if during the latest deployment period power saving was used. Power saving may be understood as performing activating at least one cell, or deactivating at least one cell, or a combination of both, wherein the at least one cell that is activated or deactivated is comprised in the group of cells.

If it is determined that the power sawing was used during the latest deployment period, then the retrieved values for the thresholds, that are considered as default, not optimized load thresholds, $\rho^i_{min}, \rho^i_{max}$ that were deployed, in the network, during the latest deployment period. On the other hand, if it is determined that the power saving was not used during the lates deployment period, then the retrieved values for the thresholds are set to zero. In other words, it is considered that deployed thresholds were $\rho^i_{min} = 0$, $\rho^i_{max} = 0$, which corresponds to a cell not being deactivated at all meaning that the power saving feature has not been activated at all.

As the values are retrieved, then the observed thresholds $\rho^i_{min}, \rho^i_{max}$ are converted into parameter $x_i$ via the one-to-one mapping built during the initialization.

Next, in block 340, the Bayesian model is updated. After the update, a new deployment period is initiated and once that new deployment period is over, the KPIs may be retrieved again, and the process returns to block 330 such that the new deployment period is now the latest deployment period.

The update of the Bayesian model in this example embodiment is performed based on the at least one KPI and the retrieved and converted values for the thresholds deployed during the latest deployment period. Thus, in this example embodiment, the thresholds $x_k$ which instead of being optimized ones are considered as the default ones. For example, if may be defined that $1_k(x_i) = 1$ where the k-th KPI sample is higher or equal $Y$ when threshold $x_i$ is deployed, and $o_i$ may be the KPI samples collected during the latest deployment period. In this case then the posterior belief on parameters $\theta$ is updated via Bayes theorem:

$$\Pr(\theta_i | o_i) = \frac{\Pr(o_i \mid \theta_i) \times \int_{\theta_{i-1}} \Pr(\theta_{i-1} | o_{i-1}) \Pr(\theta_i | \theta_{i-1}) \, d\theta_{i-1}}{\Pr(o_i)}$$

where $\Pr(\theta_{i-1} | o_{i-1})$ is the posterior computed at the last iteration, $\Pr(\theta_i | \theta_{i-1})$ is the transition law according to which the unknown parameter $\theta$ evolves over time, due to varying network conditions, and $\Pr(o_i \mid \theta_i) \prod_i f_\theta(x_i)^{\Sigma k 1 k(xi)} (1 - f_\theta(x_i))^{\Sigma k(1 - 1 k(xi))}$ is the likelihood of observations.

For example, $\Pr(\theta_i | \theta_{i-1})$ may be set to a normal variable with zero mean, diagonal covariance matrix and fixed variance, such as e.g., 0.01. In this example, the prior is on the parameters of the parametrized function and the parameters are for describing behavior of at least one KPI with regard to retrieved values. This example may have the benefit of allowing to react to variations quickly react to variations.

Finally, the trained Bayesian model is fed to the online threshold optimization procedure applied by the access node for the upcoming deployment period.

This example embodiment that is illustrated in FIG. 3 may have various benefits. For example, as the number of network sites to be optimized grows, the example embodiment is fully scalable. After the retrieved values are used for the training of the Bayesian model, the retrieved values may be discarded. As the retrieved values may be specific to the one access node and may be discarded after the training, relatively small amount of storage space is required in this example embodiment. This example embodiment is also low in terms of computational complexity, and it allows to initialize the Bayesian model using real measurements from the network which may be more accurate than using for example values obtained from a network simulator.

The apparatus 400 of FIG. 4 illustrates an example embodiment of an apparatus that may be an access node or be comprised in an access node. The apparatus may be, for example, a circuitry or a chipset applicable to an access node to realize the described embodiments. The apparatus 400 may be an electronic device comprising one or more electronic circuitries. The apparatus 400 may comprise a communication control circuitry 410 such as at least one processor, and at least one memory 420 including a computer program code (software) 422 wherein the at least one memory and the computer program code (software) 422 are configured, with the at least one processor, to cause the apparatus 400 to carry out any one of the example embodiments of the access node described above.

The memory 420 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 400 may further comprise a communication interface 430 comprising hardware and/or software for realizing communication connectivity according to one or more communication protocols. The communication interface 430 may provide the apparatus with radio communication capabilities to communicate in the cellular communication system. The communication interface may, for example, provide a radio interface to terminal devices. The apparatus 400 may further comprise another interface towards a core network such as the network coordinator apparatus and/or to the access nodes of the cellular communication system. The apparatus 400 may further comprise a scheduler 440 that is configured to allocate resources.

Even though the invention has been described above with reference to an example according to the accompanying drawings, it is clear that the invention is not restricted thereto but can be modified in several ways within the scope of the appended claims.

Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

**Claims**

1. An apparatus comprising at least one processor, and at least one memory storing instructions that, when executed by the at least one processor, cause the apparatus at least to perform:

   determine, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells;
   define the search region to have a starting point in which the pair of thresholds has values corresponding to the cells comprised in the group of cells being activated during a deployment period, regardless of a status of a network, and the values increase in the search region;
   initiate the Bayesian model;
   retrieve at least one key performance indicator, associated with the group of cells, collected during latest deployment period;
   retrieve a value of the minimum threshold and a value of the maximum threshold applied during the latest deployment period and convert the retrieved values for the Bayesian model; and
   update the Bayesian model based on the at least one key performance indicator and the retrieved and converted values.

2. An apparatus according to claim 1, wherein the apparatus is further caused to initiate the Bayesian model by defining a parametrized function, for which values of pairs of thresholds within the search region are provided as input, and by setting an initial prior distribution of parameters of the parametrized function.

3. An apparatus according to claim 1 or 2, wherein the search region provides, for the pair of thresholds, values in which the value for the maximum threshold is double of the value of the minimum threshold.

4. An apparatus according to claim 1 or 2, wherein the search region provides, for the pair of thresholds, values based on the parametrized function, that is a piece-wise linear function bounded between values zero and one.

5. An apparatus according to any previous claim, wherein the apparatus is further caused to:

   determine if power saving was used during the latest deployment period, the power saving comprising activating or deactivating at least one cell of the group of cells; and
   if power saving was used, the retrieved values are values deployed during the latest deployment period; and

if power saving was not used, the retrieved values are defined to be zero.

6. An apparatus according to any previous claim, wherein a prior of the Bayesian model is set to a normal variable with zero mean, diagonal covariance matrix and fixed variance.

7. An apparatus according to claim 6, wherein the prior is on the parameters of the parametrized function and the parameters are for describing behavior of the at least one key performance indicator with regard to the retrieved values.

8. An apparatus according to any previous claim, wherein the at least one key performance indicator comprises a combination of at least two key performance indicators.

9. An apparatus according to any previous claim, wherein the pair of thresholds are thresholds regarding traffic load in one or more cells provided by the access node.

10. An apparatus according to any previous claim, wherein the apparatus is, or is comprised in, the access node or in a computing node.

11. A method comprising:

   determining, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells;
   defining the search region to have a starting point in which the pair of thresholds has values corresponding to the cells comprised in the group of cells being activated during a deployment period, regardless of a status of a network, and the values increase in the search region;
   initiating the Bayesian model;
   retrieving at least one key performance indicator, associated with the group of cells, collected during latest deployment period;
   retrieving a value of the minimum threshold and a value of the maximum threshold applied during the latest deployment period and convert the retrieved values for the Bayesian model; and
   updating the Bayesian model based on the at least one key performance indicator and the retrieved and converted values.

12. A method according to claim 11, wherein the method further comprises initiating the Bayesian model by defining a parametrized function, for which values of pairs of thresholds within the search region are provided as input, and by setting an initial prior distribution of parameters of the parametrized function.

13. A method according to claim 11 or 12, wherein the search region provides, for the pair of thresholds, values in which the value for the maximum threshold is double of the value of the minimum threshold; or wherein the search region provides, for the pair of thresholds, values based on the parametrized function, that is a piecewise linear function bounded between values zero and one.

14. A method according to any of claims 11 to 13, wherein the method further comprises:

   determining if power saving was used during the latest deployment period, the power saving comprising activating or deactivating at least one cell of the group of cells; and
   if power saving was used, the retrieved values are values deployed during the latest deployment period; and
   if power saving was not used, the retrieved values are defined to be zero.

15. A non-transitory computer readable medium comprising program instructions that, when executed by an apparatus, cause the apparatus to perform at least the following:

   determine, for a Bayesian model, a search region for determining a pair of thresholds comprising a minimum threshold and a maximum threshold, wherein the pair of thresholds is for a group of cells provided by an access node, and the minimum threshold value is for deactivating at least one cell of the group of cells and the maximum value is for activating at least one cell of the group of cells;

define the search region to have a starting point in which the pair of thresholds has values corresponding to the cells comprised in the group of cells being activated during a deployment period, regardless of a status of a network, and the values increase in the search region;

initiate the Bayesian model;

retrieve at least one key performance indicator, associated with the group of cells, collected during latest deployment period;

retrieve a value of the minimum threshold and a value of the maximum threshold applied during the latest deployment period and convert the retrieved values for the Bayesian model; and

update the Bayesian model based on the at least one key performance indicator and the retrieved and converted values.

FIG. 1

FIG. 2A

FIG. 2B

310     Determine search region

320     Initialize Bayesian model

330     KPI retrieval

Deployment period

340     Update Bayesian model

FIG. 3

400

430
Communication Interface
TX/RX

440
Scheduler

410
Communication Control

420
Memory

422
Computer Program
Code

FIG. 4

Europäisches
Patentamt
European
Patent Office
Office européen
des brevets

# EUROPEAN SEARCH REPORT

Application Number

EP 23 21 6177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO YIN ET AL: "Machine Learning based Energy Saving Scheme in Wireless Access Networks", 2020 INTERNATIONAL WIRELESS COMMUNICATIONS AND MOBILE COMPUTING (IWCMC), IEEE, 15 June 2020 (2020-06-15), pages 1573-1578, XP033799865, DOI: 10.1109/IWCMC48107.2020.9148536 [retrieved on 2020-07-24] * the whole document * | 1-15 | INV. H04W24/02 ADD. H04W52/34 |
| A | MAGGI LORENZO ET AL: "Bayesian Optimization for Radio Resource Management: Open Loop Power Control", IEEE JOURNAL ON SELECTED AREAS IN COMMUNICATIONS, IEEE SERVICE CENTER, PISCATAWAY, US, vol. 39, no. 7, 13 May 2021 (2021-05-13), pages 1858-1871, XP011860857, ISSN: 0733-8716, DOI: 10.1109/JSAC.2021.3078490 [retrieved on 2021-06-16] * Sections I, III.C, IV, V and VI * | 1-15 | |
| A | EP 4 013 138 A1 (NOKIA SOLUTIONS & NETWORKS OY [FI]) 15 June 2022 (2022-06-15) * paragraphs [0038], [0041] - [0042], [0045] - [0047], [0050] - [0051], [0067] * | 1-15 | |

TECHNICAL FIELDS
SEARCHED (IPC)

H04W

-/--

The present search report has been drawn up for all claims

| Place of search | Date of completion of the search | Examiner |
|---|---|---|
| Munich | 7 May 2024 | Aulló Navarro, A |

EPO FORM 1503 03.82 (P04C01)

Europäisches
Patentamt

European
Patent Office

Office européen
des brevets

## EUROPEAN SEARCH REPORT

**Application Number**

EP 23 21 6177

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | LORENZO MAGGI ET AL: "Energy savings under performance constraints via carrier shutdown with Bayesian learning", ARXIV.ORG, CORNELL UNIVERSITY LIBRARY, 201 OLIN LIBRARY CORNELL UNIVERSITY ITHACA, NY 14853, 2 February 2023 (2023-02-02), XP091427816, * the whole document * | 1-15 | |
| X,P | MAGGI LORENZO ET AL: "Energy Savings under Performance Constraints via Carrier Shutdown with Bayesian Learning", 2023 JOINT EUROPEAN CONFERENCE ON NETWORKS AND COMMUNICATIONS & 6G SUMMIT (EUCNC/6G SUMMIT), IEEE, 6 June 2023 (2023-06-06), pages 1-6, XP034384706, DOI: 10.1109/EUCNC/6GSUMMIT58263.2023.10188338 [retrieved on 2023-07-26] * the whole document * | 1-15 | |
| X,P | EP 4 132 120 A1 (NOKIA SOLUTIONS & NETWORKS OY [FI]) 8 February 2023 (2023-02-08) * abstract * * paragraphs [0006], [0011], [0031] - [0036] * * paragraphs [0048], [0053] - [0054]; claims 1, 8 * | 1-15 | **TECHNICAL FIELDS SEARCHED (IPC)** |

The present search report has been drawn up for all claims

| Place of search | Date of completion of the search | Examiner |
|---|---|---|
| Munich | 7 May 2024 | Aulló Navarro, A |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 23 21 6177

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2024

| Patent document cited in search report | | Publication date | Patent family member(s) | | Publication date |
|---|---|---|---|---|---|
| EP 4013138 | A1 | 15-06-2022 | CN | 114630407 A | 14-06-2022 |
| | | | EP | 4013138 A1 | 15-06-2022 |
| | | | US | 2022191798 A1 | 16-06-2022 |
| EP 4132120 | A1 | 08-02-2023 | CN | 115707075 A | 17-02-2023 |
| | | | EP | 4132120 A1 | 08-02-2023 |
| | | | US | 11576118 B1 | 07-02-2023 |

EPO FORM P0459

For more details about this annex : see Official Journal of the European Patent Office, No. 12/82